# EUROPÄISCHE PATENTSCHRIFT

(11) **EP 1 061 599 B1**
(45) Veröffentlichungstag und Bekanntmachung des Hinweises auf die Patenterteilung: **11.12.2002**
(21) Anmeldenummer: 00111983.3
(22) Anmeldetag: 19.06.2000
(51) Int. Cl.: H01M 8/04

(54) **Verfahren zur Regelung der Wärmeabgabe von Brennstoffzellen**
Process for controlling the heat output of a fuel cell stack
Méthode pour la commande de l'émission de chaleur d'un système de piles à combustible

(30) Priorität: 17.06.1999 DE 19928811; 03.11.1999 AT 184199
(43) Veröffentlichungstag der Anmeldung: 20.12.2000
(73) Patentinhaber: Vaillant GmbH, 42859 Remscheid (DE); Vaillant N.V., 1620 Drogenbos (BE); VAILLANT S.A.R.L, 94045 Créteil Cedex (FR); Vaillant Gesellschaft m.b.H., 1231 Wien (AT); Vaillant Ltd., Rochester Kent ME2 4EZ (GB); Vaillant B.V., 1100 DT Amsterdam (NL); Vaillant GmbH, 8953 Dietikon 1 (CH); Vaillant A/S, 2690 Karlslunde (DK)
(72) Erfinder: Bielski, Martin, 42859 Remscheid (DE); Thomas, Rolf, 42929 Wermelskirchen (DE)

(56) Entgegenhaltungen:
- EP-A- 0 568 822
- DE-A- 19 517 813
- DE-A- 19 951 216
- DE-C- 4 322 765
- US-A- 5 023 151
- US-A- 5 751 604

## Beschreibung

Die Erfindung bezieht sich auf ein Verfahren gemäß dem Oberbegriff des Anspruches 1.

Ein solches Verfahren wurde z.B. durch die DE 195 17 813 C bekannt. Bei diesem bekannten Verfahren wird als Stellgröße der elektrische Strom verwendet, den die Brennstoffzelle liefert.

Bei diesem Verfahren ergibt sich jedoch der Nachteil, daß die Wärmeentwicklung der Brennstoffzelle nur relativ grob in Abhängigkeit vom gelieferten Strom gesteuert werden kann und erhebliche Abweichungen von der vorgesehenen Wärmeleistung in Kauf genommen werden müssen.

Aus US 5 751 604 A ist ebenfalls bekannt, dass eine Wärmeanforderung - zumindest zum Teil - durch eine Brennstoffzelle gedeckt werden kann. Einer Erhöhung der Wärmeanforderung wird hier durch einen elektrischen Heizer und elektrischen Strom aus dem Netz entsprochen. Dies ist in der Gesamtenergiebilanz unvorteilhaft.

Ziel der Erfindung ist es, *diese Nachteile* zu vermeiden und ein Verfahren der eingangs erwähnten Art vorzuschlagen, das eine weitgehend genaue Regelung der Wärmeleistung der Brennstoffzelle ermöglicht.

Erfindungsgemäß wird dies bei einem Verfahren der eingangs erwähnten Art durch die kennzeichnenden Merkmale des Anspruches 1 erreicht.

Die Wärmeentwicklung einer Brennstoffzelle ist von der abgegebenen elektrischen Leistung abhängig und damit nicht nur vom gelieferten Strom, sondern auch von der Brennstoffzellenspannung. Diese Spannung ist wiederum neben anderen Faktoren von der Anzahl der einzelnen Zellen, dem jeweiligen Lastzustand und der Gaszusammensetzung abhängig.

Durch die vorgeschlagenen Maßnahmen wird daher nicht nur der Gleichstrom, der von der Brennstoffzelle abgegeben wird, zur Regelung der Wärmeabgabe verwendet, sondern berücksichtigt auch die variable Zellenspannung, da eben als Stellgröße die elektrische Leistung zur Regelung der Wärmeleistung der Brennstoffzelle verwendet wird.

Durch die Merkmale des Anspruches 2 ergibt sich eine einfache Möglichkeit zur Ermittlung und Anwendung des elektrischen Leistungssollwertes.

Dabei wird durch die Merkmale des Anspruches 3 eine Überregelung vermieden.

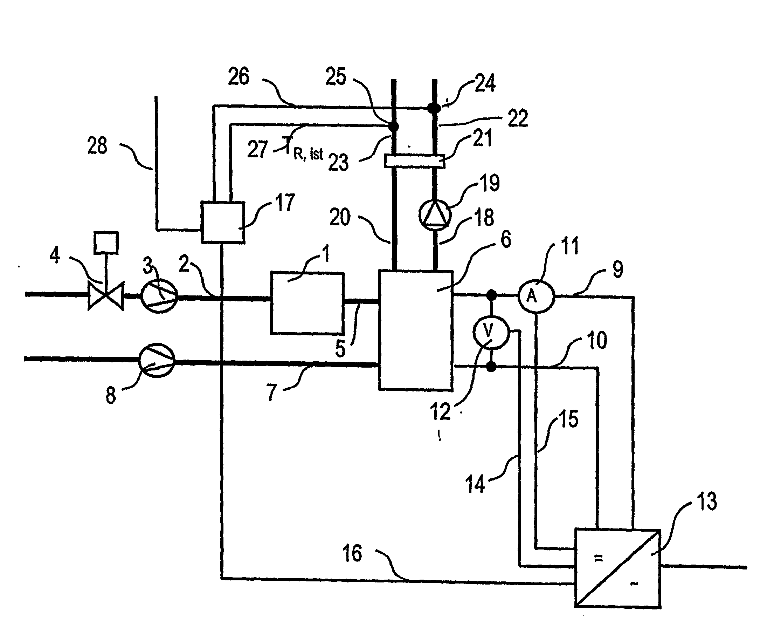

Die Erfindung wird nun anhand der Zeichnung näher erläutert, die schematisch eine Brennstoffzellenanordnung zeigt.

Bei der dargestellten Brennstoffzellenanordnung ist ein Reformer 1 über eine Leitung 2, in der ein Gebläse 3 und ein Gasventil 4 eingebaut sind, mit Erdgas versorgt und setzt dieses in Wasserstoffgas um.

Dabei ist der Reformer 1 ausgangsseitig über eine Anschlußleitung 5 mit einem Brennstoffzellenstapel 6 verbunden, der über eine Luftleitung 7, in der ein Gebläse 8 angeordnet ist, mit Luft versorgbar ist.

Ausgangsseitig ist der Brennstoffzellenstapel über zwei elektrische Leitungen 9, 10, in deren einer ein Strommesser 11 angeordnet ist, mit einem Wechselrichter 13 verbunden. Weiter ist an den elektrischen Leitungen 9 und 10 ein Spannungsmesser 12 angeschlossen. Der Spannungsmesser 12 und der Strommesser 11 sind über Signalleitungen 14, 15 mit dem Wechselrichter 13 verbunden, der aus dem momentanen Spannungs- und Stromwert die momentane elektrische Leistung errechnet.

Weiter ist der Wechselrichter 13 über eine Steuerleitung 16 mit einem Regler 17 verbunden, der den Wechselrichter 13 mit einem Leistungs-Sollwert P_{el,soll} versorgt, wobei der Wechselrichter 13 den Leistungs-Sollwert P_{el,soll} mit dem aus dem Spannungs- und dem Stromwert errechneten momentanen elektrischen Leistungswert vergleicht und die Leistungsabgabe des Brennstoffzellenstapels 6 entsprechend steuert.

Der Brennstoffzellenstapel 6 ist über eine Vorlaufleitung 18, in der eine Umwälzpumpe 19 angeordnet ist, und eine Rücklaufleitung 20 mit einem Wärmetauscher 21 verbunden.

An diesen Wärmetauscher 21 sind eine Heizungs-Vorlaufleitung 22 und eine HeizungsRücklaufleitung 23 angeschlossen, in denen je ein Temperaturfühler 24, 25 angeordnet ist. Diese Temperaturfühler 24, 25 sind über Signalleitungen 26, 27 mit dem Regler 17 verbunden, der über eine Steuerleitung 28 mit einem nicht dargestellten Sollwertgeber verbunden ist.

Der Regler 17 errechnet aus dem Temperatur-Sollwert Tₛₒₗₗ des Sollwertgebers und den von den Temperaturfühlern 24, 25 gelieferten Temperaturwerten T_{R, ist} (Rücklauftemperatur) und T_{V, ist} (Vorlauftemperatur) die für die Bereitstellung der erforderlichen Wärmemenge entsprechende elektrische Soll-Leistung P_{el, soll}, die an den Wechselrichter 13 geliefert wird.

## Patentansprüche

1. Verfahren zur Regelung der Wärmeabgabe von Brennstoffzellen (6), bzw. Brennstoffzellenstapeln in Heizgeräten im wärmegeführten Betrieb, wobei eine elektrische Stellgröße nach dem PID-Verfahren zur Regelung der Vor- oder Rücklauftemperatur (T_{V, ist,} T_{R, ist}) der Brennstoffzelle (6) oder an einem Wärmetauscher (21) des Heizgerätes vorgesehen ist, wobei die Regelung kontinuierlich oder quasikontinuierlich erfolgt, **dadurch gekennzeichnet, daß** als elektrische Stellgröße die elektrische Leistung (P_{el,soll}) der Brennstoffzelle (6), bzw. des Brennstoffzellenstapels verwendet wird.

2. Verfahren nach Anspruch 1, **dadurch gekennzeichnet, daß** aus einer Temperaturabweichung gegenüber einer gewählten Solltemperatur (Tₛₒₗₗ) eine thermische Solleistung errechnet wird, die mit Hilfe der Stromkennzahl der Brennstoffzelle (6), bzw. des Brennstoffzellenstapels in eine elektrische Solleistung (P_{el,soll}) umgerechnet und an einen der Brennstofzelle (6) nachgeschalteten Wechselrichter (13) weitergegeben wird, der die elektrische Leistung der Brennstoffzelle (6) bzw. des Brennstoffzellenstapels auf den Leistungssollwert (P_{el,soll}) regelt.

3. Verfahren nach Anspruch 1 oder 2, **dadurch gekennzeichnet, daß** die thermische Solleistung unter Berücksichtigung von Minimal- und Maximalwerten errechnet wird.

## Claims

1. A process of controlling the heat output of fuel cells (6) or stacks of fuel cells in heaters in heat-controlled operation, providing for an electrical control variable by the PID process for controlling the supply or return temperature (T_{s,act,} T_{r,act}) of the fuel cell (6) or on a heat exchanger (21) of the heater, the control being either continuous or quasi-continuous, **characterised in that** the electrical power (P_{el, targ}) of the fuel cell (6) or stack of fuel cells is used as an electrical control variable.

2. A process as claimed in Claim 1, **characterised in that** a temperature deviation from a selected target temperature (T_{targ}) is used as a basis for calculating a thermal target power which, with the aid of the power-and-heat ratio of the fuel cell (6) or stack of fuel cells, is converted into an electrical target power (P_{el,targ}) and passed on to an inverter (13) arranged downstream of the fuel cell (6), which regulates the electrical power of the fuel cell (6) or stack of fuel cells to the target power value (P_{el,targ}).

3. A process as claimed in Claim 1 or 2, **characterised in that** the thermal target power is calculated by taking minimum and maximum values into account.

## Revendications

1. Procédé pour la régulation du débit de chaleur de piles à combustibles (6) ou d'ensembles de piles à combustibles dans des appareils de chauffage à marche thermorégulée, une grandeur réglante électrique suivant le procédé PID étant prévue pour la régulation de la température d'alimentation ou de retour (T_{A,eff}, T_{R,eff}) de la pile à combustible (6) ou sur un échangeur de chaleur (21) de l'appareil de chauffage, la régulation étant continue ou quasi-continue, procédé **caractérisé par le fait que** la puissance électrique (P_{él cons.}) de la pile à combustible (6) ou de l'ensemble de piles à combustibles sert de grandeur réglante électrique.

2. Procédé suivant la revendication 1, **caractérisé par le fait qu'**à partir d'un écart de température vis-à-vis d'une température de consigne (T_{cons}), il est calculé une puissance thermique de consigne qui, à l'aide de la caractéristique électrique de la pile à combustible (6) ou de l'ensemble de piles à combustibles est convertie en une puissance électrique de consigne (P_{él,cons}) transmise à un onduleur (13) en aval de la pile à combustible (13), lequel règle la puissance électrique de la pile à combustible (6) ou de l'ensemble de piles à combustibles sur la consigne (P_{él,cons}).

3. Procédé suivant la revendication 1 ou 2, **caractérisé par le fait que** la puissance thermique de consigne est calculée compte tenu de valeurs minimales et maximales.
